# DEMANDE DE BREVET EUROPEEN

(11) **EP 0 829 691 A1**
(43) Date de publication de la demande: **18.03.1998**
(21) Numéro de dépôt: 97402124.8
(22) Date de dépôt: 12.09.1997
(51) Int. Cl.: F25J 3/04, F25J 5/00

(54) **Procédé de compression d'un gaz associé à une unité de séparation d'un mélange gazeux**

(30) Priorité: 13.09.1996 FR 9611216
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Girault, Jean-Louis, 00400 Liege (BE); Garot, Corinne, 94490 Ormesson-Sur-Marne (FR); Fraysse, Philippe, 92260 Fontenay-Aux-Roses (FR)
(74) Mandataire: Mercey, Fiona Susan

(57) **Abrégé**

Dans un procédé de compression d'un gaz, associé à une unité de séparation (5) d'un mélange gazeux, le compresseur (1, 2, 7) comprend un nombre d'étages inférieur à celui qu'il faudrait pour réaliser un compresseur optimal de type isotherme comprimant le même débit dudit gaz à la même pression.

Le compresseur peut comprimer le mélange gazeux à séparer ou un produit de la séparation.

## Description

La présente invention concerne un procédé de compression d'un gaz associé à une unité de séparation d'un mélange gazeux, et un appareil destiné à la mise en oeuvre du procédé. Elle concerne plus particulièrement un procédé de compression d'air séparé dans une colonne de distillation.

Dans les procédés de distillation, il est courant de comprimer le mélange gazeux et ensuite de l'épurer dans un système d'épuration (par exemple un système d'adsorption) qui doit être régénéré après un certain temps de fonctionnement, par le passage d'un gaz chauffé à la température de régénération. Dans le cas de l'air, les bouteilles d'adsorbant qui constituent le système d'adsorption sont généralement chauffées par un gaz résiduaire pendant environ un tiers du temps de cycle.

Cette régénération est coûteuse en énergie. Par exemple pour une installation de séparation d'air de 200 T/J traitant 30,000 Nm³/h d'air, un réchauffeur du gaz résiduaire consomme 300 kW, soit une moyenne de 100 kW.

Un des objets de cette invention est la suppression du réchauffeur indépendant, un autre objet étant l'intégration des systèmes de compression et de régénération afin de réduire les coûts énergétiques de l'installation.

Selon la présente invention, il est prévu un procédé de compression d'un gaz associé à une unité de séparation d'un mélange gazeux dans lequel un débit dudit gaz est comprimé dans un compresseur à la pression requise par le procédé, caractérisé en ce que le nombre d'étages dudit compresseur est inférieur, typiquement de 1, à celui qu'il faudrait pour réaliser un compresseur optimal de type isotherme comprimant le même débit dudit gaz à la même pression.

Suivant des modes particuliers de réalisation il est prévu que
- le gaz comprimé dans le compresseur est le mélange gazeux destiné à l'unité de séparation ou provient de l'unité de séparation.
- le mélange gazeux comprimé issu dudit compresseur est de l'air qui est refroidi puis envoyé à une unité d'épuration (B1) pour adsorption en eau et CO_{2.}

Selon la présente, il est également prévu un appareil de compression d'un gaz associé à une unité de séparation d'un mélange gazeux comprenant :
- un compresseur capable d'amener le gaz à une pression requise
- une unité de séparation du mélange gazeux,
- des moyens pour envoyer un gaz au compresseur caractérisé en ce que le nombre d'étages dudit compresseur est inférieur, typiquement de 1, à celui qu'il faudrait pour réaliser un compresseur optimal de type isotherme comprimant le même débit dudit gaz à la même pression.

Suivant des modes particuliers de réalisation il est prévu :
- des moyens pour envoyer le mélange gazeux destiné à l'unité de séparation au compresseur et des moyens pour envoyer le mélange gazeux comprimé à l'unité de séparation,
- des moyens pour envoyer un gaz provenant de l'unité de séparation au compresseur,
- un moyen de refroidissement du gaz comprimé en aval du compresseur,
- des moyens pour envoyer au moins une partie du mélange gazeux comprimé à un groupe frigorifique à absorption.

L'invention s'applique ainsi aux procédés de compression d'un gaz provenant d'une unité de séparation, comme par exemple d'un débit d'azote provenant d'une unité de séparation d'air.

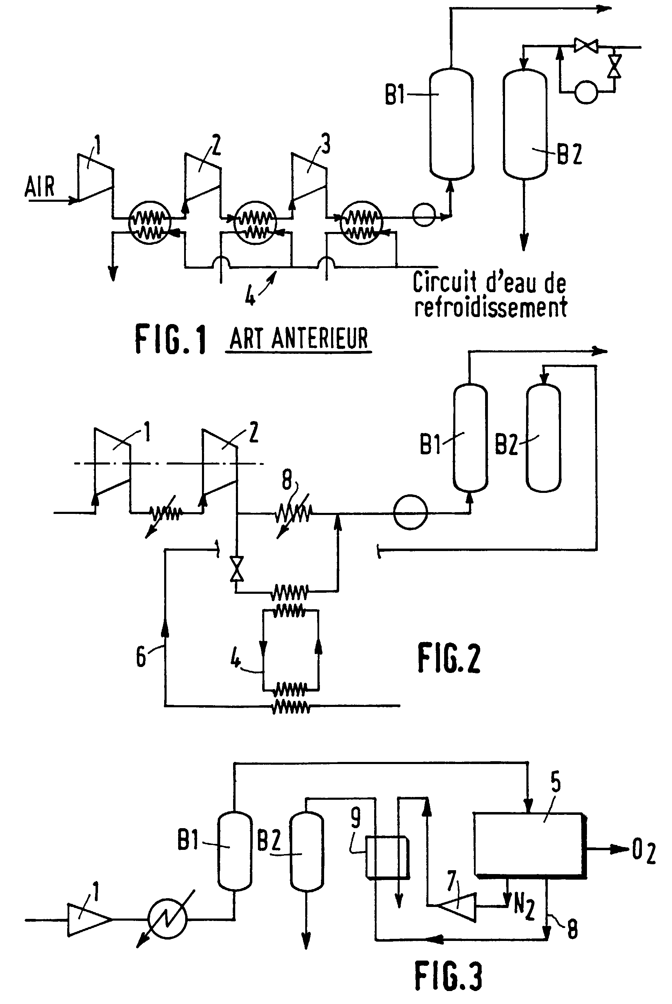

Dans les appareils de séparation d'air traitant plus de 10 000 Nm³/h d'air et dans lesquels l'air est comprimé à la pression de fonctionnement de la colonne MP (c'est-à-dire environ 5 bars), on utilise généralement un compresseur d'air de type centrifuge à 3 ou 4 étages de compression. L'échauffement dans chaque étage de compression étant réduit (ΔT ≅ 60 °C pour chaque étage de compression) d'un taux de compression de 1, 7, ces compresseurs dépensent une énergie proche de l'optimum technicoéconomique. Dans l'exemple de la figure 1, on voit un compresseur à trois étages de compression 1, 2, 3, chaque étage de compression étant refroidi par un circuit d'eau de refroidissement 4. L'air comprimé est refroidi en sortant de la dernière roue 3 par le circuit d'eau et est ensuite épuré en eau et en dioxyde de carbone dans le lit d'adsorbant B1.

Un exemple de mise en oeuvre de l'invention va maintenant être décrit en regard des dessins annexés sur lesquels :
- les figures 2 à 5 représentent schématiquement des procédés d'alimentation d'une unité de séparation conformes à l'invention.

Pour produire le même débit d'air à la même pression que celui de la figure 1, le compresseur de la figure 2 ne comprend que deux étages de compression (1, 2), ayant chacun un taux de compression plus élevé que celui des étages de compression de l'art antérieur et donc un échauffement plus grand. Ainsi l'air sortant du compresseur est à environ 140 °C correspondant à un taux de compression par étage de l'ordre de 2, 3. Cette température est suffisante pour amener l'azote impur 6 de l'unité de séparation à la température de régénération du lit d'adsorbant B2. Dans la figure 2, l'échange de chaleur entre l'air et l'azote est effectué par l'intermédiaire d'un fluide caloporteur 4 (en l'occurence de l'eau sous pression) qui transfère la chaleur de l'air à l'azote impur.

L'air est ainsi refroidi par le circuit de fluide caloporteur 4 et par un refroidisseur 8, un débit variable de l'air pouvant être envoyé vers le circuit de fluide caloporteur. De cette manière l'azote impur 6 est chauffé à 120 °C.

Un complément de réfrigération de l'air est souvent nécessaire pour refroidir l'air comprimé à sa température d'épuration (≅ 10°C). Dans ce cas, on utilise un groupe frigorifique de type mécanique pour fournir cet appoint de réfrigération.

Dans le cas où ledit compresseur est un compresseur d'azote 7, on voit dans la figure 3 qu'un débit d'air est envoyé à une unité de séparation d'air 5 qui produit de l'oxygène gazeux, de l'azote gazeux pur et de l'azote gazeux impur. A sa sortie de compression, l'azote gazeux qui est à une température d'environ 160 °C, entre dans un échangeur 9 où il réchauffe l'azote impur 8 à 120 °C.

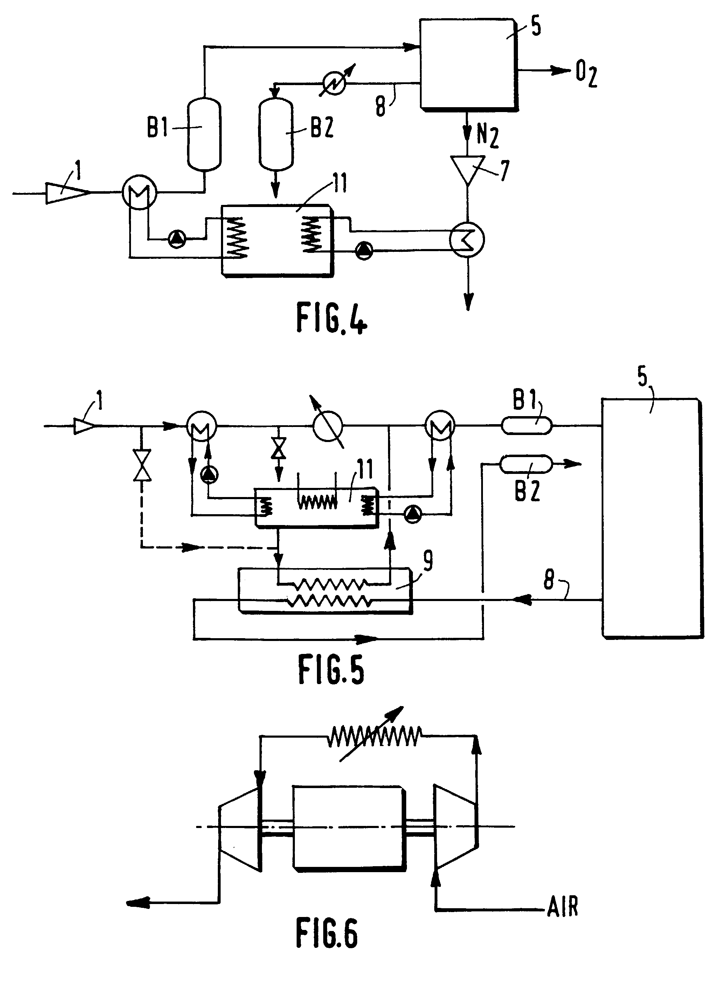

Dans une variante du procédé de la figure 3, on voit à la figure 4 que l'azote gazeux pur est comprimé dans le compresseur 7 et ensuite transfère de la chaleur à un groupe frigorifique à absorption 11 qui refroidit l'air comprimé à sa température d'épuration par adsorption.

On peut combiner l'enseignement divulgué dans les figures 3 et 4 pour utiliser la chaleur de compression de l'azote comprimé dans le compresseur 7, d'une part en tant que source de chaleur d'un groupe frigorifique à absorption 11 (premier niveau de température) et d'autre part transférer à l'azote impur de régénération la chaleur non utilisée précédemment (deuxième niveau de température).

L'invention peut s'appliquer de la même manière à l'air comprimé de la figure 2. La figure 5 montre une utilisation combinée de l'invention associant le refroidissement de l'air comprimé avant son épuration par transfert de chaleur à un groupe frigorifique à absorption 11 et à l'azote impur 8 de régénération par l'échangeur 9.

L'invention s'applique aussi (fig. 6) à un compresseur utilisant un moteur électrique à haute vitesse entraînant en extrémités d'arbres les deux étages de compression retenus. Ce type de compresseur sans multiplicateur est plus compact, plus simple et donc plus facile à installer.

L'invention s'applique également aux unités de séparation autres que les unités de séparation par distillation et aux unités de séparation par distillation autres que celles qui distillent l'air.

## Revendications

1. Procédé de compression d'un gaz associé à une unité de séparation d'un mélange gazeux (5) dans lequel un débit dudit gaz est comprimé dans un compresseur (1, 2, 7) à la pression requise par le procédé, caractérisé en ce que le nombre d'étages (1, 2) dudit compresseur est inférieur, typiquement de 1, à celui qu'il faudrait pour réaliser un compresseur optimal de type isotherme comprimant le même débit dudit gaz à la même pression.

2. Procédé selon la revendication 1 dans lequel le gaz comprimé dans le compresseur (1, 2) est le mélange gazeux destiné à l'unité de séparation (5).

3. Procédé selon la revendication 1 dans lequel le gaz comprimé dans le compresseur (7) provient de l'unité de séparation (5)

4. Procédé selon la revendication 1 dans lequel le mélange gazeux comprimé issu dudit compresseur (1, 2) est de l'air qui est refroidi puis envoyé à une unité d'épuration (B1) par adsorption en eau et CO₂.

5. Procédé selon les revendications 2, 3 ou 4 dans lequel le gaz comprimé est refroidi par échange thermique indirect avec un fluide provenant de l'unité de séparation qui est ensuite utilisé pour la régénération de ladite unité d'épuration (B1)

6. Procédé selon l'une quelconque des revendications précédentes dans lequel le gaz est refroidi par échange thermique direct avec un fluide de réfrigération en circuit fermé.

7. Procédé selon l'une quelconque des revendications 4 à 6 dans lequel ledit air comprimé est utilisé comme source de chaleur d'un groupe frigorifique à absorption (11) produisant un fluide froid lequel fluide froid est utilisé pour refroidir ledit air comprimé à un niveau de température plus bas.

8. Procédé selon l'une quelconque des revendications précédentes dépendantes de la revendication 4 dans lequel ledit air comprimé d'alimentation, en sortie du dernier étage (2) de compression, est à une température d'au moins 100 °C.

9. Procédé selon l'une quelconque des revendications précédentes dans lequel ladite pression de procédé est d'au moins 4 bars.

10. Procédé selon l'une quelconque des revendications précédentes dans lequel ledit compresseur (1, 2, 7) comprend au moins deux étages (1, 2) de compression.

11. Appareil de compression d'un gaz associé à une unité de séparation d'un mélange gazeux comprenant :
- un compresseur (1, 2, 7), capable d'amener le gaz à une pression requise
- une unité de séparation du mélange gazeux,
- des moyens pour envoyer un gaz au compresseur caractérisé en ce que le nombre d'étages (1, 2) dudit compresseur est inférieur, typiquement de 1, à celui qu'il faudrait pour réaliser un compresseur optimal de type isotherme comprimant le même débit dudit gaz à la même pression.

12. Appareil selon la revendication 11 comprenant des moyens pour envoyer le mélange gazeux destiné à l'unité de séparation (5) au compresseur (1, 2) et des moyens pour envoyer le mélange gazeux comprimé à l'unité de séparation.

13. Appareil selon la revendication 11 comprenant des moyens pour envoyer un gaz provenant de l'unité de séparation (5) au compresseur (7)

14. Appareil selon les revendications 11, 12 ou 13 comprenant un moyen de refroidissement du gaz comprimé en aval du compresseur (1, 2).

15. Appareil selon la revendication 14 dans lequel ce moyen de refroidissement permet un échange thermique indirect avec un fluide provenant de l'unité de séparation ou un échange direct avec un fluide de réfrigération en circuit fermé.

16. Appareil selon les revendications 11, 12 ou 13 comprenant des moyens pour envoyer au moins une partie du mélange gazeux comprimé à un groupe frigorifique à absorption (11).

17. Appareil selon l'une des revendications 11 à 16 caractérisé en ce que ledit compresseur comprend deux étapes de compression entraînés chacun en extrémités d'arbre par un moteur électrique sans multiplicateur.

18. Procédé de séparation d'un gaz de l'air dans lequel un gaz de l'air est épuré et envoyé à un appareil de séparation (5), un premier gaz est soutiré de l'appareil de séparation et comprimé (en 7) et un deuxième gaz provenant de l'appareil de séparation est envoyé à une unité d'épuration du gaz de l'air à séparer afin de la régénérer caractérisé en ce que le premier gaz comprimé sert à réchauffer le deuxième gaz avant que celui-ci soit envoyé à l'unité d'épuration.

19. Installation de séparation d'un gaz de l'air comprenant un système de colonnes de distillation, des moyens pour soutirer un premier gaz d'une colonne du système et des moyens (7) pour le comprimer, des moyens pour soutirer un deuxième gaz d'une colonne du système et un moyen d'échange de chaleur (4, 9) capable de permettre l'échange de chaleur entre le premier et le deuxième gaz et en aval du moyen d'échange de chaleur des moyens pour envoyer le deuxième gaz à une unité d'épuration.
